# EUROPEAN PATENT APPLICATION

(11) **EP 3 376 374 A1**
(43) Date of publication of application: **19.09.2018**
(21) Application number: 18151758.2
(22) Date of filing: 16.01.2018
(51) Int. Cl.: G06F 9/451, G06F 8/38, G06F 3/14, G09G 5/12

(54) **SCREEN CREATION APPARATUS, SIMULATION APPARATUS AND SCREEN CREATION PROGRAM**

(30) Priority: 14.03.2017 JP 2017048293
(71) Applicant: OMRON CORPORATION, Kyoto-shi, Kyoto 600-8530 (JP)
(72) Inventor: TAKAHASHI, Daisuke, Japan, 600-8530 (JP); UEDA, Kiyotaka, Japan, 600-8530 (JP)
(74) Representative: 2K Patentanwälte Blasberg Kewitz & Reichel

(57) **Abstract**

An amount of communication necessary for displaying a screen is acquired in a stage of creating the screen. A screen creation apparatus (100) creates a program for causing a target apparatus (4) to display a screen. The screen includes one or more components. The target apparatus (4) makes a request for data for the components necessary for displaying or executing the components of the screen and receives the data as a response from a counterpart apparatus (1, 2, 3) via a communication path (115), and the screen creation apparatus (100) includes a communication amount storage unit (90) that stores an amount of communication necessary for a case in which the data for the components is transferred via a communication path (115) for each of the components and acquires an amount of screen communication that is the amount of communication corresponding to the one or more components included in the screen.

## Description

### BACKGROUND

### Technical Field

The present disclosure relates to a screen creation apparatus and a screen creation program, and particularly to an apparatus and a program that create a screen including one or more components.

### Description of Related Art

A programmable terminal such as a human machine interface (HMI) that is applied to the field of factory automation (FA) displays information related to an FA device that is acquired from a programmable logic controller (PLC) or the like. In addition, an operator who is a production manager or the like can input data for controlling the FA device via a screen of the HMI by a touch operation or the like.

In relation to the HMI, a user (this means a person who designs or installs the screen of the programmable terminal in this specification) creates a display screen to be able to input the data in accordance with a purpose or a specification of the FA device.

For example, Patent Document 1 (Japanese Unexamined Patent Application Publication No. 6-186940) discloses a display control device for a programmable terminal. The display control device of Patent Document 1 measures a time required by a data communication unit of the display control device for extracting data from an external device and a time required by a data display unit for displaying the data, and displays the measured time data.

### Patent Documents

[Patent Document 1] Japanese Unexamined Patent Application Publication No. 6-186940

### SUMMARY

An HMI program for realizing a general HMI includes a plurality of pages that respectively form screens. An operator performs a target operation by switching the screens by performing a button operation or the like. When the screens are switched, data necessary for displaying the screen or executing a program code associated with the screen is acquired for a page after the switching from an external controller or the like related to the FA through communication.

As one of performance indexes that are greatly related to satisfaction of the operator, there is "a time (screen switching time) required for switching a certain screen to another screen". There is an amount of communication necessary for displaying the screen as one of elements that affects the screen switching time (hereinafter, also simply referred to as an amount of communication), and it is desired to acquire the amount of communication.

However, the programmable terminal described in Patent Document 1 described above does not have a configuration that acquires the aforementioned amount of communication.

An object of an aspect of the present disclosure is to provide a screen creation apparatus capable of acquiring a amount of communication necessary for displaying a screen.

According to an aspect of the present disclosure, there is provided a screen creation apparatus that creates a program for causing a target apparatus to display a screen. The screen includes one or more components, and the target apparatus make a request for data necessary to display or execute the components of the screen and receives the data as a response from a counterpart apparatus via a communication path in a case in which the screen is displayed, the screen creation apparatus including: a communication amount storage unit that stores an amount of communication necessary for a case in which the data for the components is transferred via the communication path, and in a case in which the program is created, an amount of screen communication that is an amount of communication corresponding to the one or more components included in the screen is acquired.

Preferably, the screen creation apparatus further includes: a performance estimation unit that estimates a performance of the program for causing the target apparatus to display the screen by using the amount of screen communication.

Preferably, the performance includes a screen switching time required for causing the target apparatus to display the screen, and the performance estimation unit includes a switching time acquisition unit that acquires the screen switching time from a communication performance of the counterpart apparatus and the amount of screen communication.

Preferably, the performance includes the amount of communication during display that is the amount of communication that is requested to be transferred during the display of the screen in the target apparatus, and the performance estimation unit includes a communication-amount-during-display acquisition unit that acquires the amount of communication during display by using the amount of screen communication and a period over which the data for the components is transferred to the target apparatus during the display of the screen.

Preferably, the performance includes a band occupancy that is a proportion of a band of the communication path occupied by the transfer of the data for the components during the display of the screen in the target apparatus, and the performance estimation unit includes a band occupancy acquisition unit that acquires a proportion of the band occupied by the amount of communication during display, which is acquired by using the amount of screen communication and a period over which the data for the components is transferred to the target apparatus during the display of the screen.

Preferably, information related to the estimated performance is output via an output unit. Preferably, the screen creation apparatus further includes: a performance evaluation unit that evaluates the performance by comparing the performance with a threshold value set in advance.

Preferably, information related to the evaluation is output via an output unit. Preferably, the information related to the evaluation includes information that specifies a screen that has a component that exceeds an amount of data set in advance and information that indicates a position of the component, which exceeds the amount of data set in advance, in the screen.

According to an aspect of the present disclosure, the screen creation apparatus further includes: a simulation unit that simulates the display of the screen by the target apparatus, and the simulation unit displays, on a display, a screen based on the program with a stand-by time in accordance with the acquired screen switching time.

Preferably, the screen creation apparatus further includes: a simulation unit that simulates the display of the screen by the target apparatus, and the simulation unit displays, on a display, a screen based on the program with a stand-by time in accordance with the acquired amount of communication during display

Preferably, the screen creation apparatus further includes: a simulation unit that simulates the display of the screen by the target apparatus, and the simulation unit displays, on a display, a screen based on the program with a stand-by time in accordance with the acquired band occupancy.

According to another aspect of the present disclosure, there is provided a simulation apparatus that simulates behavior during display of a screen in a target apparatus. The screen includes one or more components, the target apparatus makes a request for data necessary to display or execute the components of the screen and receives the data for the components as a response from a counterpart apparatus via a communication path in a case in which the screen is displayed, and the simulation apparatus includes a communication amount storage unit that stores an amount of communication necessary for a case in which the data for the components is transferred via the communication path, and a performance estimation unit that estimates a performance for causing the target apparatus to display the screen of a program by using the amount of communication in a case in which the program for displaying the screen is created.

According to yet another aspect of the present disclosure, there is provided a program that causes a computer to execute a method of creating a screen to be displayed by a target apparatus, the screen including one or more components, and the target apparatus making a request for data necessary to display or execute the components of the screen and receiving the data as a response from a counterpart apparatus via a communication path in a case in which the screen is displayed. The method includes: acquiring an amount of screen communication that is the amount of communication corresponding to the one or more components included in the screen in a case in which a display program for causing the target apparatus to display the screen is created, and estimating a performance for causing the target apparatus to display the screen of the display program by using the amount of screen communication.

According to the present disclosure, it is possible to acquire the amount of communication necessary to cause the target apparatus to display a screen in a stage of creating the screen.

### BRIEF DESCRIPTION OF THE DRAWINGS

FIG. 1 is a diagram illustrating an outline of a configuration of a system that includes a screen creation apparatus according to a first embodiment.
FIG. 2 is a diagram schematically illustrating a form of use of an HMI program in a programmable terminal 4 according to the first embodiment.
FIG. 3 is a diagram illustrating an outline of a configuration of a PC 100 according to the first embodiment.
FIG. 4 is a diagram illustrating an outline of a configuration of the programmable terminal 4 according to the first embodiment.
FIG. 5 is a diagram illustrating an outline of a development environment of the HMI program according to the first embodiment.
FIG. 6 is a diagram schematically illustrating a performance estimation evaluation unit 10B that a PC 100 has and peripheral components thereof according to the first embodiment.
FIG. 7 is a processing flowchart according to the first embodiment.
FIG. 8 is a diagram for explaining acquisition of variables and communication periods of a page according to the first embodiment.
FIG. 9 is a diagram for explaining acquisition of variables and communication periods of a page according to the first embodiment.
FIG. 10 is a diagram for explaining acquisition of variables and communication periods of a page according to the first embodiment.
FIG. 11 is a diagram for explaining acquisition of an amount of communication that is required at the time of starting screen display or at the time of switching according to the first embodiment.
FIG. 12 is a diagram for explaining acquisition of the amount of communication during display according to the first embodiment.
FIG. 13 is a diagram illustrating an example of display of information related to performance and evaluation according to the first embodiment.

### DESCRIPTION OF THE EMBODIMENTS

Hereinafter, the respective embodiments will be described with reference to drawings. In the following description, the same reference numerals will be given to the same components and elements. The names and the functions thereof are also the same. Therefore, detailed description thereof will not be repeated.

### [Description of terms and functions]

An "HMI program" is an application program that describes one or a plurality of pages corresponding to a screen to be displayed by a programmable terminal. If the program of each page of the HMI program is executed, the screen is displayed. The screen of the "HMI program" includes components necessary to cause the programmable terminal to operate.

The "components" include image data, text data, and program codes. When the HMI program is executed, and the screen is displayed, pictures, character strings, and the like are displayed, and also functions (functions such as image display, data inputs and outputs, and reception of operations) caused by execution of the program codes are provided by the components. In particular, components with appearances from among the components are referred to as "user interface (UI) components".

"Data for the components" includes values of variables or equations necessary to determine display states of the components.

A "library" is a library (file) of components that can be used (reused) in the HMI program.

A "resource" includes data to be incorporated in the screen, such as image data and character string data. In addition, the resource may also include the program codes.

A "project" is information that forms one application program.

A "standard project" is a project for creating the HMI program. The "project" of the HMI program includes the HMI program, one or more libraries that have resource data to be referred to by the HMI program, page list data, variable definitions, data types defined by a user, communication setting data, and the like.

A "performance of the HMI program" includes a "screen switching performance" and a "screen operation performance". An index of the "screen switching performance" includes a screen switching time from reception of an operation of starting display of a screen or switching the display from an operator until the screen is displayed or switched on the display. An index of the "screen operation performance" includes a time required for updating (response) display of components included in the screen that is displayed. The time required for updating is indicated by an amount of communication per unit time or a band occupancy that occurs during the display of the screen as will be described later.

### [First embodiment]

### (Outline)

According to the first embodiment, a PC 100 is an example of the "screen creation apparatus" that creates a program (screen creation program) for causing a target apparatus to display a screen, and a programmable terminal 4 is an example of the "target apparatus". In addition, the programmable terminal 4 can also include the functions of the screen creation apparatus, and in such a case, the "screen creation apparatus" is the programmable terminal 4 itself.

The PC 100 creates a screen. In other words, the PC 100 creates a program for displaying a screen. The screen includes one or more components. The components can include the UI components as described above. The target apparatus makes a request for data for the components to a "counterpart apparatus" via a communication path and receives the data for the components as a response from the counterpart apparatus via the communication path in a case of displaying the screen.

The PC 100 stores the amount of communication necessary for a case in which the data for the components is transferred via the communication path, for each group of components included in the screen. In a case in which the user operates the screen creation apparatus and creates the screen, the screen creation apparatus estimates a performance of the program for causing the target apparatus to display the screen by using the amount of screen communication, which is the amount of communication of data for components corresponding to the components included in the screen, and causes an output unit, such as a display, sound output unit, or a printer, to output a result of the estimation.

As described above, according to the first embodiment, it is possible to acquire the amount of communication that is considered to be necessary for a case in which the target apparatus is made to execute a program and display a screen, at a stage in which the user creates the program of the screen without causing the target apparatus to execute the program and display the screen. The amount of communication represents the performance when causing the target apparatus of the program to display the screen.

### (System configuration)

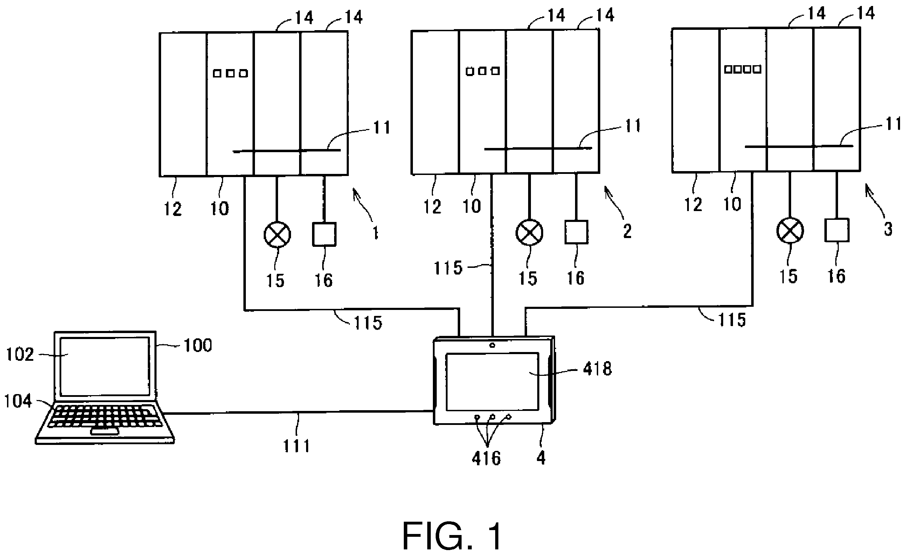

FIG. 1 is a diagram illustrating an outline of a configuration of a system that includes the screen creation apparatus according to the first embodiment. Referring to FIG. 1, the system includes a plurality of PLCs including PLC 1, PLC 2, and PLC 3 that are applied to the FA, a programmable terminal 4 that is operated mainly by the operator, and a personal computer (PC) 100. The programmable terminal 4 is connected to the PLC 1, the PLC 2, and the PLC 3 via a communication path 115. Although the communication path 115 includes one of Ethernet (registered trademark), for example, the communication path 115 is not limited thereto. The PC 100 can be connected to the programmable terminal 4 via a wired or wireless communication path 111. Although the communication path 111 includes a local area network (LAN), for example, the communication path 111 is not limited thereto.

Each of the PCL 1 to PLC 3 has a similar configuration. The PLC typically includes a central processing unit (CPU) unit 10 that has a CPU serving as a main body that executes a program, a power source unit 12 that supplies electric power to the CPU unit 10 and the like, and an input/output (IO) unit 14 that exchanges signals with a field device. The IO unit 14 is connected to the CPU unit 10 via a system bus 11. Typically, the IO unit 14 acquires a signal from a detection sensor 15 that is a field device or drives a relay 16, which is a field device, in accordance with a result of execution of the program by the CPU unit 10. In addition, although the field devices are examples of devices related to the FA and include, for example, the PLC, the detection sensor 15, and the relay 16, the field devices are not limited to these devices.

The PC 100 is an example of the "screen creation apparatus". The PC 100 provides an environment in which the user develops (generates) a project. The project generated by the PC 100 is transmitted to the programmable terminal 4.

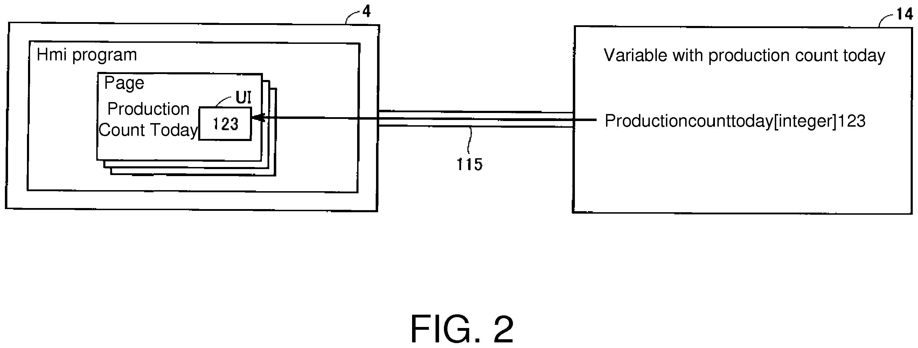

FIG. 2 is a diagram schematically illustrating a form of use of an HMI program in the programmable terminal 4 according to the first embodiment. The programmable terminal 4 plays a role as a GUI for the HMI by executing the HMI program created by the PC 100.

Referring to FIG. 2, when the programmable terminal 4 executes each page of the HMI program and displays the screen, the programmable terminal 4 makes a request for data of the field devices (measurement data of the detection sensor 15, detection data, state data of the relay 16, and the like) to each PLC via the communication path 115. The programmable terminal 4 displays the data received as a response as components of the screen. In this manner, it is possible to provide a notification of the data of the field devices to the operator.

### (Configuration of PC device 100)

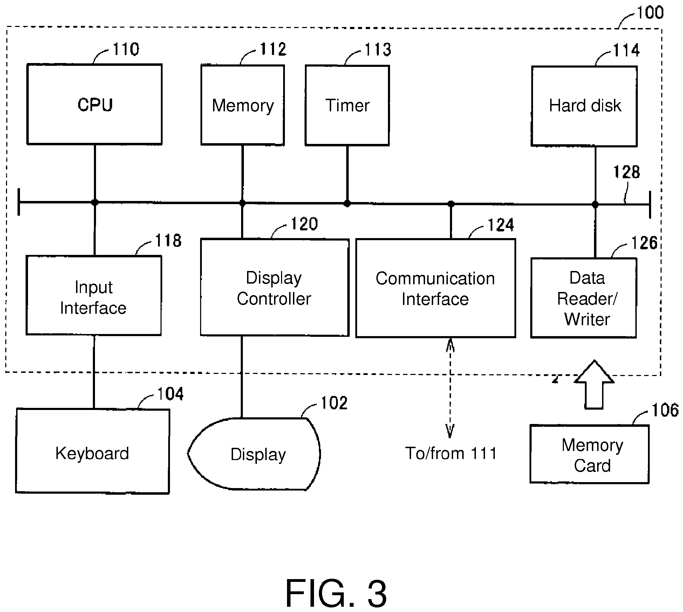

FIG. 3 is a diagram illustrating an outline of a configuration of the PC 100 according to the first embodiment. Referring to FIG. 3, the PC 100 includes a CPU 110, a memory 112 and a hard disk 114 that serves as a storage unit, a timer 113 that measures time and outputs measured time data to the CPU 110, an input interface 118, a display controller 120, a communication interface 124, and a data reader/writer 126. These respective parts are connected to each other so as to be able to communicate data via a bus 128.

The CPU 110 performs various kinds of computation by executing programs (code) that are stored in the hard disk 114. The memory 112 is typically a volatile storage device such as a dynamic random access memory (DRAM). Data received from the data reader/writer 126, work data, and the like are stored in the memory 112 in addition to program data read from the hard disk 114.

The input interface 118 relays data transfer between the CPU 110 and input devices such as a keyboard 104, a mouse (not illustrated), and a touch panel (not illustrated). That is, the input interface 118 receives operation commands given by the user operating the input devices.

The display controller 120 is connected to the display 102, which is a typical example of the display device, and displays results of processing performed by the CPU 110 and the like. The display controller 120 drives the display 102 in accordance with the display data from the CPU 110. In this manner, an image in accordance with the display data is displayed on the display 102.

The communication interface 124 relays data transfer with the programmable terminal 4 via the LAN. The data reader/writer 126 relays data transfer between the CPU 110 and a memory card 106, which is an external storage medium (or refers to a computer-readable recording medium).

In addition, the memory card 106 is distributed in a state in which the programs and the like to be executed by the PC 100 are stored, and the data reader/writer 126 reads the programs from the memory card 106. In addition, the memory card 106 includes a general-purpose semiconductor storage device such as a compact flash (CF) or a secure digital (SD), a magnetic storage medium such as a flexible disk, an optical storage medium such as a compact disk-read only memory (CD-ROM), or the like.

In addition, other output devices such as a printer may be connected to the PC 100 as needed.

### (Configuration of programmable terminal 4)

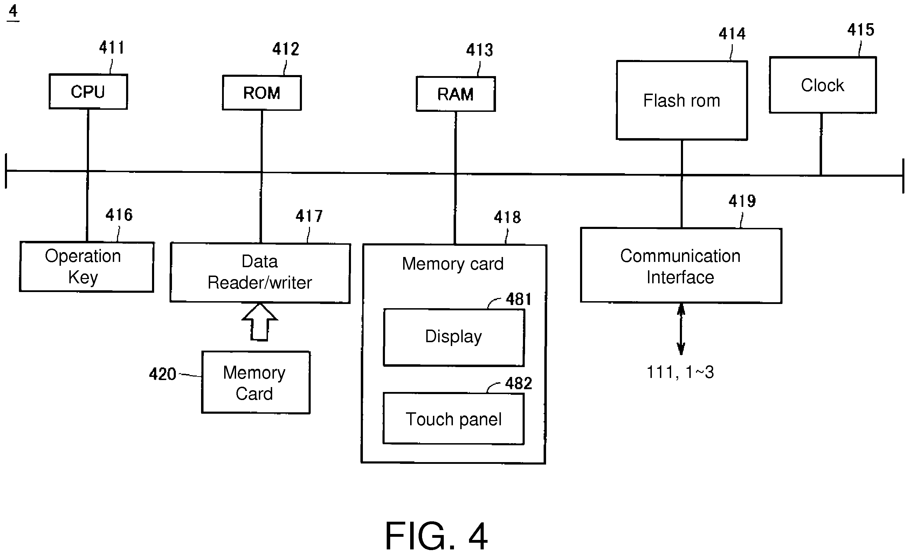

FIG. 4 is a diagram illustrating an outline of a configuration of the programmable terminal 4 according to the first embodiment. Referring to FIG. 4, the programmable terminal 4 includes a CPU 411, a read only memory (ROM) 412, a random access memory (RAM) 413, a flash ROM 414 that stores various programs and data in a non-volatile manner, a clock 415, an operation key 416 that receives user's operations, a data reader/writer 417, a touch screen 418, and a communication interface 419. In addition, these respective parts are connected to each other via an internal bus.

The touch screen 418 includes a display 481 that functions as a display unit and a touch panel 482 that receives user's inputs. The touch panel 482 is installed so as to cover the display 481. The communication interface 419 communicates with various devices such as the PC 100 and the PLC1 to PLC 3.

The data reader/writer 417 relays data transfer between the CPU 411 and a memory card 420, which is an external storage medium. The memory card 420 can be distributed in a state in which programs and the like to be executed by the programmable terminal 4 are stored. The data reader/writer 126 reads the programs from the memory card 420. In addition, the memory card 420 includes a general-purpose semiconductor storage device such as a compact flash (CF) or a secure digital (SD), a magnetic storage medium such as a flexible disk, an optical storage medium such as a compact disk-read only memory (CD-ROM), or the like.

In addition, other output devices such as a printer may be connected to the programmable terminal 4 as needed.

### (Development environment of HMI program)

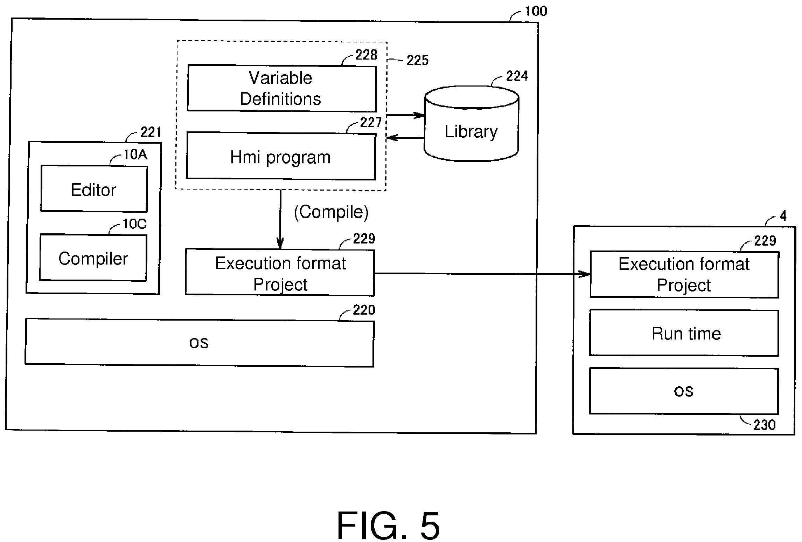

FIG. 5 is a diagram illustrating an outline of a development environment of the HMI program according to the first embodiment. FIG. 5 illustrates an execution environment of the HMI program in the programmable terminal 4 in association with the development environment in the PC 100.

Referring to FIG. 5, the development environment in the PC 100 includes an operating system (OS) 220, and an HMI device tool program 221. The HMI device tool program 221 may be loaded on the memory 112 from the hard disk 114. The HMI device tool program 221 includes an editor 10A that creates the HMI program, a library, various projects, and the like and a compiler 10C that compiles the various projects. In addition, the PC 100 includes a library 224 that has resources for creating the library and the HMI program and data such as functions. The HMI program includes data for components for definitions of arrangement and appearances of display elements, operation commands using a programming language, and the like.

According to the first embodiment, the compiler 10C compiles a standard project 225 created by the editor 10A. The standard project 225 is created and edited by using data in the library 224 in some cases. The standard project 225 includes the HMI program 227 and definitions 228 of various kinds of data. The standard project 225 is stored in a storage unit such as the hard disk 114 or the memory 112.

The definition 228 includes definitions of variables used (referred to) in the HMI program 227. The variables defined by the definition 228 includes variables referred to by the components of the HMI program 227. Details of the definition 228 will be described later.

The user activates the compiler 10C in a case of compiling the standard project 225. The compiler 10C compiles the stored standard project 225 and outputs an execution format project 229 that has been converted into codes in an execution format.

The PC 100 stores the execution format project 229 in the storage unit or loads the execution format project 229 into the programmable terminal 4 via the communication path 111. The programmable terminal 4 stores the execution format project 229 transferred from the PC 100 in a flash ROM or the like.

If the operator of the programmable terminal 4 provides a command for executing the HMI program, the CPU 411 reads the execution format project 229 from the flash ROM 414 and executes the read execution format project 229 via a run time under control of the OS 230 in the programmable terminal 4. In this manner, a screen corresponding to the HMI program is displayed in the programmable terminal 4.

### (Functional configuration)

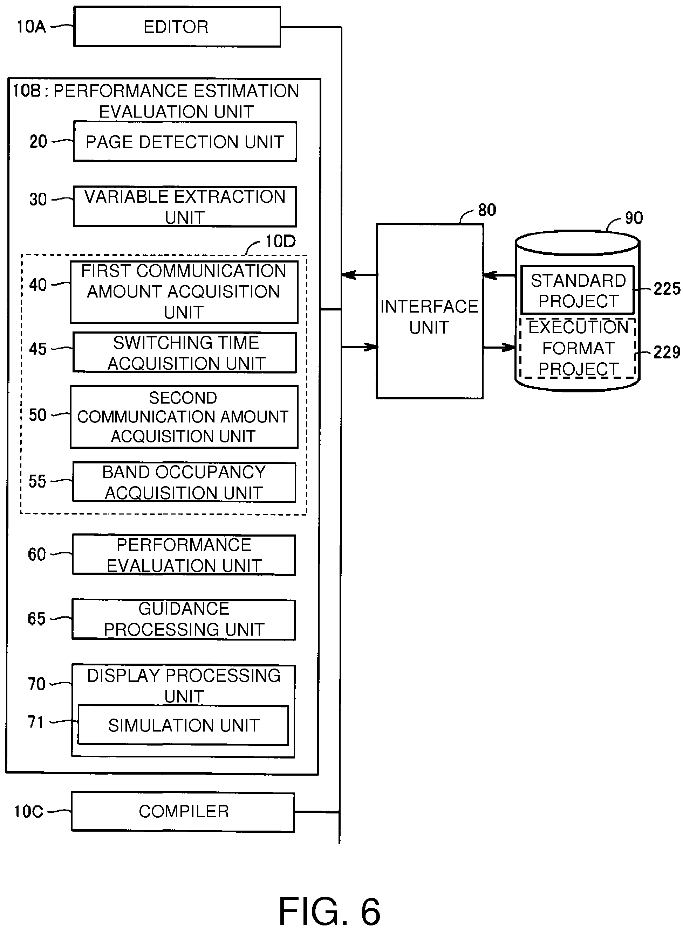

According to the first embodiment, the PC 100 estimates and evaluates a performance of the HMI program when the HMI program is created. FIG. 6 is a diagram schematically illustrating a performance estimation evaluation unit 10B that the PC 100 has and peripheral components thereof according to the first embodiment. FIG. 6 illustrates the editor 10A of the HMI program, the compiler 10C of the HMI program, an interface unit 80, and a storage unit 90 as the peripheral components. The editor 10A mainly edits the HMI program in accordance with user's operation. The compiler 10C compiles the HMI program created by the editor 10A. There is also a case in which the editor 10A returns to the creation again after the compiling. According to the first embodiment, the creation of the HMI program includes editing of the HMI program by the editor 10A, the compiling of the HMI program by the compiler 10C, or both.

The performance estimation evaluation unit 10B estimates the performance of the HMI program for causing the programmable terminal 4 to display the screen and evaluates the estimated performance.

Referring to FIG. 6, the performance estimation evaluation unit 10B includes a page detection unit 20 that detects pages of the HMI program, a variable extraction unit 30 that extracts information related to variables included in the pages, a performance estimation unit 10D, a performance evaluation unit 60 that evaluates the estimated performance, a guidance processing unit 65 that outputs guidance information based on the evaluation, and a display processing unit 70.

The performance estimation unit 10D basically estimates the performance by using the amount of screen communication that is the amount of communication necessary for a case in which a total set of the data necessary for the respective components of the screen is transferred via the communication path 115. Specifically, the performance estimation unit 10D includes a first communication amount acquisition unit 40 that acquires the amount of screen communication in a case in which the display of the screen is started or the screen is switched, a switching time acquisition unit 45 that acquires an estimated value of the screen switching time in the programmable terminal 4, a second communication amount acquisition unit 50 that acquires the amount of screen communication while the screen is displayed, and a band occupancy acquisition unit 55 that acquires a communication band occupancy indicating the degree (proportion) of the band of the communication path 115 occupied by the amount of screen communication.

The display processing unit 70 executes the HMI program and outputs display data for causing the display 102 to display the screen to the display controller 120. In addition, the display processing unit 70 includes a simulation unit 71 that simulates the display of the screen by the programmable terminal 4.

The functions of these respective parts can be realized by programs, circuits, or a combination thereof. The programs are stored in the storage unit such as the memory 112 or the hard disk 114. The functions of the respective parts are realized by the CPU 110 reading the programs from the storage unit and executing the programs.

### (Processing flowchart)

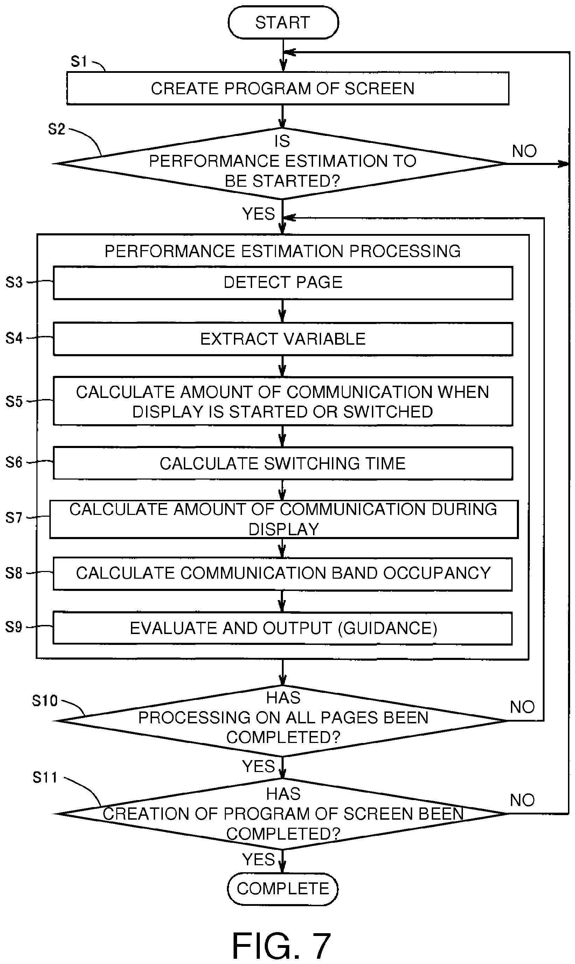

FIG. 7 is a processing flowchart according to the first embodiment. The processing flowchart in FIG. 7 is stored as a program in the memory 112, the hard disk 114, or the like and is read and executed by the CPU 110. This program can be distributed in a state of being stored in the memory card 106. The CPU 110 reads the program from the memory card 106 via the data reader/writer 126 and stores the read program in the hard disk 114 or the memory 112.

In addition, the program is received by the communication interface 124 via a network, which is not illustrated in the drawing. The CPU 110 may store the received program in the memory 112, the hard disk 114, or the like.

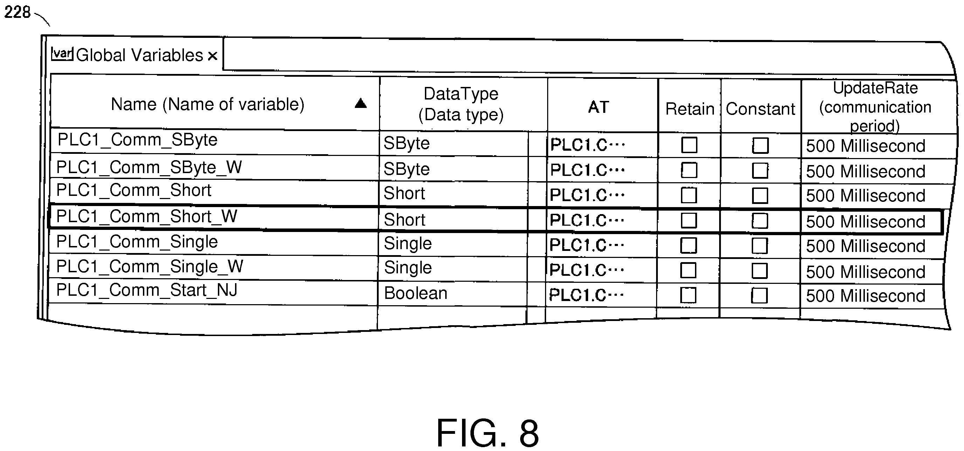

Referring to FIG. 7, an outline of processing related to the estimation and the evaluation of the performance related to the display of the screen of the HMI program will be described. The processing in the respective steps in FIG. 7 will be described in detail with reference to FIGS. 8 to 12.

First, the user activates the editor 10A and creates the standard project 225 including the HMI program 227 and the definitions 228 of the screen (Step S1). The created standard project 225 is stored in the storage unit 90.

The CPU 110 determines whether or not to receive an operation for starting estimation of the performance via the input interface 118 (Step S2). The CPU 110 returns to Step S1 in a case in which the CPU 110 does not receive the operation (NO in Step S2), or starts processing of estimating the performance for each page of the HMI program in a case in which the CPU 110 receives the operation (YES in Step S2).

First, the page detection unit 20 of the CPU 110 detects a page from the HMI program 227 (Step S3). Thereafter, processing is performed on the detected page.

The variable extraction unit 30 searches the definitions 228 on the basis of names of variable included in the page detected in Step S2 (hereinafter, also referred to as a detected page). The variable extraction unit 30 reads, by searching, data types (or data lengths) and communication periods corresponding to all the respective variables included in the detected page from the definitions 228 (Step S4).

The first communication amount acquisition unit 40 calculates the amount of data of each variable included in the detected page on the basis of the content read from the definitions 228 in Step S4 and acquires the amount of screen communication necessary when the display of the image of the page is started or when the switching to the image of the page is performed (Step S5).

The switching time acquisition unit 45 acquires the screen switching time required when the display of the screen of the detected page is started or for a case in which the switching to the screen is performed, on the basis of the amount of screen communication calculated in Step S5 or the performance of the PLC as an example of the "counterpart apparatus" (Step S6).

Here, a time required for transmitting a request for data of the variables included in the designated page to the counterpart apparatus via the communication path 115, receive a response (data corresponded to the variables of the request) from the counterpart apparatus, and complete the display of the screen in which the received data is incorporated in the components after the CPU 110 receives an operation for starting the display of the designated page (screen) or an operation for switching to the designated page.

In addition, according to the first embodiment, the screen switching time acquired by the switching time acquisition unit 45 represents time required for the response (data corresponding to the variables) from the PLC being transferred to the programmable terminal 4 via the communication path 115. That is, in relation to the screen switching time, it is assumed that the time required by the programmable terminal 4 to transmit the aforementioned request to the PLC and the time required for the programmable terminal 4 to complete the display of the screen of the page in which the received data as a response from the counterpart apparatus is incorporated in the component are substantially zero in the first embodiment for simplifying the description.

The second communication amount acquisition unit 50 calculates the necessary amount of communication from the amount of data of the variables included in the page that is displayed and the communication periods during the display of the screen of the page (Step S7).

The band occupancy acquisition unit 55 calculate the aforementioned communication band occupancy on the basis of the amount of communication necessary during the display, which has been calculated in Step S7, and the performance related to the response from the counterpart apparatus (Step S8).

Subsequently, the performance evaluation unit 60 evaluates the estimated performance of the detected page and outputs a result of the evaluation (Step S9). Specifically, the performance evaluation unit 60 compares the aforementioned screen switching time and the communication band occupancy with corresponding threshold values, respectively. The threshold values are values for maintaining the designated performance and are determined in advance by experiments or the like. In a case in which any of the screen switching time and the communication band occupancy is greater than the corresponding threshold value, the performance evaluation unit 60 outputs warning to the display 102 via the display controller 120 on the basis of the result of the comparison.

In addition, the guidance processing unit 65 displays information related to the evaluation along with the warning in Step S9. The guidance processing unit 65 displays information that specifies that the screen has a component that exceeds an amount of data set in advance or information that indicates a position of the component, which exceeds the amount of data set in advance, in the screen. The guidance processing unit 65 may output information that specifies a location at which a variable with a large data amount is referred to in the detected page (screen). In this manner, information (guidance) about a solution for changing the screen switching time or the communication band occupancy to a value that is equal to or less than the corresponding threshold value can be presented to the user.

The CPU 110 determines whether or not the processing of estimating the performance has been performed on all the pages of the HMI program 227 (Step S10). If the processing has not been completed (NO in Step S10), the processing returns to Step S3, and the following processing is similarly performed on the next detected page.

Meanwhile, when the processing of estimating the performance has been completed on all the pages of the HMI program 227 (YES in Step S10), the CPU 110 determines whether or not to receive an operation for completing the creation of the HMI program of the screen from the user (Step S11). When the operation for completing the creation of the HMI program is received (YES in Step S11), a series of processing is completed. When the operation for completing the creation of the HMI program is not received (NO in Step S11), the processing returns to Step S1, and the processing for creating the HMI program is performed.

### <Processing in Step S4>

FIGS. 8, 9, and 10 are diagrams for explaining acquisition of variables and communication periods of a page according to the first embodiment. FIG. 8 illustrates an example of content of the definitions 228. Referring to FIG. 8, the definitions 228 includes names of variables, types of data of the variables (or data lengths), communication periods, and the like in association with the respective variables. In addition, although the data types are mainly types unique to the program language that describes the HMI program 227, the data types may include data types defined by the user.

In addition, in a case in which the programmable terminal 4 periodically makes a request (inquiry) the data of the variables to the counterpart apparatus, the communication periods represents intervals of the requests. The user sets the communication periods for the respective variables in the definitions 228 when the HMI program is created. For example, the communication period for a variable, for which it is necessary to frequently update data during the display of the screen, is set to be shorter (100 ms or 500 ms, for example), and communication periods for other variables set to be longer (5 seconds, for example). Since the user can set the communication periods in a variable manner, it is possible to optimize the performance of the HMI program even if the available band in the communication path 115 is limited.

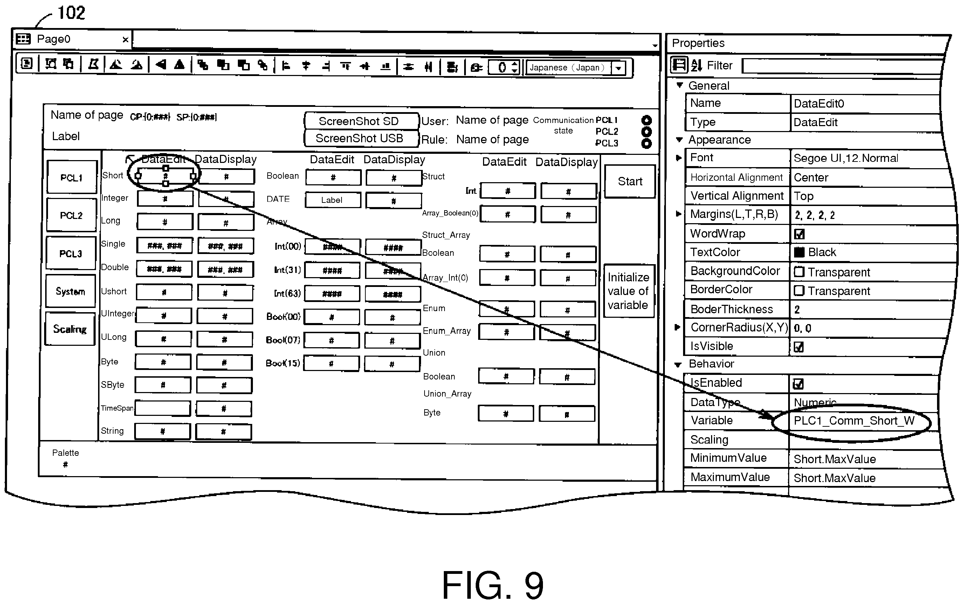

In Step S4, the detected page is displayed on the display 102 as illustrated in FIG. 9, for example. The variable extraction unit 30 scans the detected page and extracts character strings included in the detected page. The variable extraction unit 30 collates the extracted character strings and character strings of the names of the variables in the definition 228 in FIG. 8 and extracts all the variables from the detected page on the basis of a result of the collating. In addition, the variable extraction unit 30 searches the definitions 228 on the basis of the extracted names of the respective variables and extracts corresponding data types and communication periods.

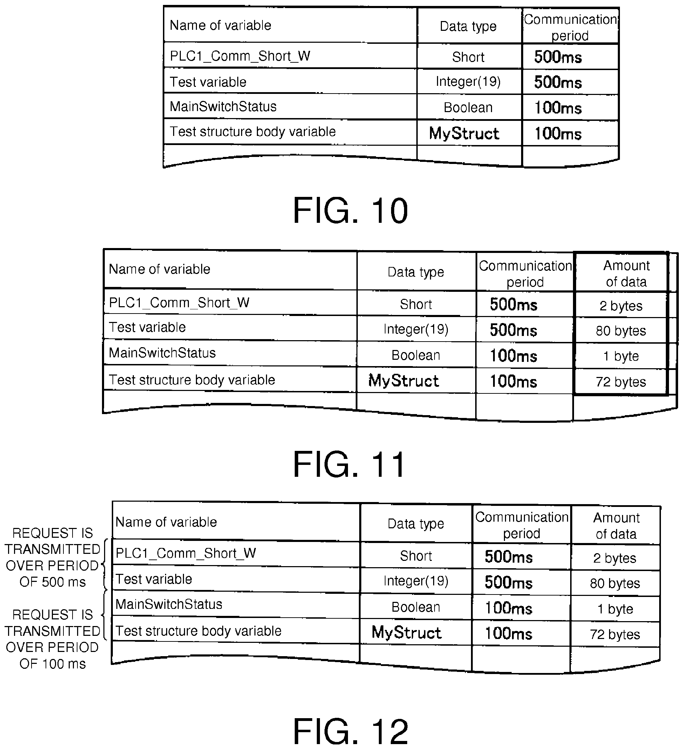

FIG. 9 illustrates that a variable PLC1_Comm_Short_W, for example, is extracted from the detected page. In addition, the variable extraction unit 30 acquires the data type 'Short" and the communication period "500 ms" for the variable PLC1_Comm_Short_W according to the definition 228 in FIG. 8. The variable extraction unit 30 associates names of variables, data types, and communication periods with the respective variables extracted from the detected page as illustrated in FIG. 10. The variable extraction unit 30 stores the information associated as described above in the storage unit.

### <Processing in Step 5>

FIG. 11 is a diagram for explaining acquisition of the amount of communication required when the display of the screen is started or switched according to the first embodiment. In the processing of acquiring the amount of communication required for a case in which the display of the screen of the detected page is started or a case in which the screen is a screen after the switching (Step S5), the first communication amount acquisition unit 40 acquires the amounts of data of the respective variables included in the detected page and calculates the sum of the acquired amounts of data.

For example, the information in which the names of variables, the data types, the communication periods, and the data amounts are associated (see FIG. 11) is stored in the storage unit 90 by the processing in Step S4. According to the first embodiment, the respective data lengths are defined in advance, and for example, the data length of the Short type is 2 bytes, the data length of the Integer (19) type (= a type of alignment of twenty 4-byte integers) is 4 × 20 = 80 bytes, and the data length of a Boolean type is 1 byte (1 bit depending on devices). In addition, the amount of data of the variables of user defined types, such as a structure body type, are calculated from the amounts of data of the respective members of the structure body. According to the first embodiment, since MyStruct type that is a structure body variable type defined by the user is a structure body that has eighteen Integer-type members, the amount of data of the structure body variable is calculated as 4 × 18 = 72 bytes.

The first communication amount acquisition unit 40 calculates the amounts of data of the respective variables in the detected page on the basis of the aforementioned data lengths defined in advance and calculates 155 bytes (2 + 80 + 1 + 72 = 155) that is the sum of the amounts of data. In this manner, the amount of communication required when the display of the screen of the detected page is started or when switching to the screen is performed.

### <Processing in Step S6>

The switching time acquisition unit 45 calculates the screen switching time in a case in which the display of the screen of the detected page is started or a case in which switching to the screen is performed, on the basis of the aforementioned amount of communication and the performance of the counterpart apparatus of the programmable terminal 4. Specifically, the counterpart apparatus has a response performance of about 1000 bytes per second for the reading request from the programmable terminal 4. In addition, the response performance is stored in the storage unit of the PC 100 in advance. Therefore, the switching time acquisition unit 45 calculates the screen switching time for the amount of communication (155 bytes) of the screen of the detected page calculated as described above as (155 bytes)/(1000 bytes/second) = 155 millisecond (ms). As described above, the screen switching time required for causing the programmable terminal 4 to display the screen of the detected page is acquired by calculating the ratio between the amount of communication (1000 bytes/second) per unit time, that is, the communication performance of the counterpart apparatus, and the amount of screen communication (155 bytes). In addition, the communication performance of the counterpart apparatus in the acquisition of the switching time is not limited to the amount of communication per unit time by which the counterpart apparatus can respond, and for example, another element such as the number of data access commands to which the counterpart apparatus can respond or the like may be considered.

### <Processing in Step S7>

FIG. 12 is a diagram for explaining acquisition of the amount of communication during display according to the first embodiment. The information in FIG. 12 is acquired by the aforementioned processing. FIG. 12 illustrates that reading requests of data of variables 'PLC1_Comm_Short_W' and 'test variable" among the variables included in the detected page are transmitted to the counterpart apparatus every 0.5 seconds, and that reading requests of data of variables "MainSwitchStatus" and "test structure body variable" are transmitted to the counterpart apparatus at every 0.1 seconds.

The second communication amount acquisition unit 50 calculates the amount of communication required per unit time (one seconds, for example) that occurs during the display of the screen of the detected page is calculated from the information in FIG. 12 as (2 bytes + 80 bytes)/(0.5 seconds) + (1 byte + 72 bytes)/(0.1 seconds) = 894 bytes/second. Therefore, it is possible to recognize that the amount of communication required increases during the display of the image of the detected page as more variables with shorter reading periods or large amounts of data are included in the detected page.

### <Processing in Step S8>

According to the first embodiment, the counterpart apparatus has a response performance of about 100 bytes per second as described above. Therefore, in a case in which a reading request for data (total amount: 894 bytes) of variables in the detected page illustrated in FIG. 11 or 12 is transmitted, the band occupancy acquisition unit 55 calculates he band occupancy of the communication path 115 in a case in which a response thereto is transmitted to the counterpart apparatus as (894 bytes/second)/(1000 bytes/second) = 89.4 %. In this manner, the band occupancy of the communication path 115 in the case in which the screen of the detected page is displayed is acquired.

In addition, the aforementioned methods of acquiring the amount of data, the amount of communication, the screen switching time, and the band occupancy are not limited to the acquisition method based on the calculation as described above. For example, a method of searching tables and reading values from the tables may be employed. In a case of the band occupancy, for example, a method of storing a table that registers band occupancies corresponding to the respective total amounts of data of variables in advance, and searching, by the band occupancy acquisition unit 55, the table on the basis of the total amount of data calculated for the detected page and reading the corresponding band occupancies from the table may be employed.

### <Processing in Step S9>

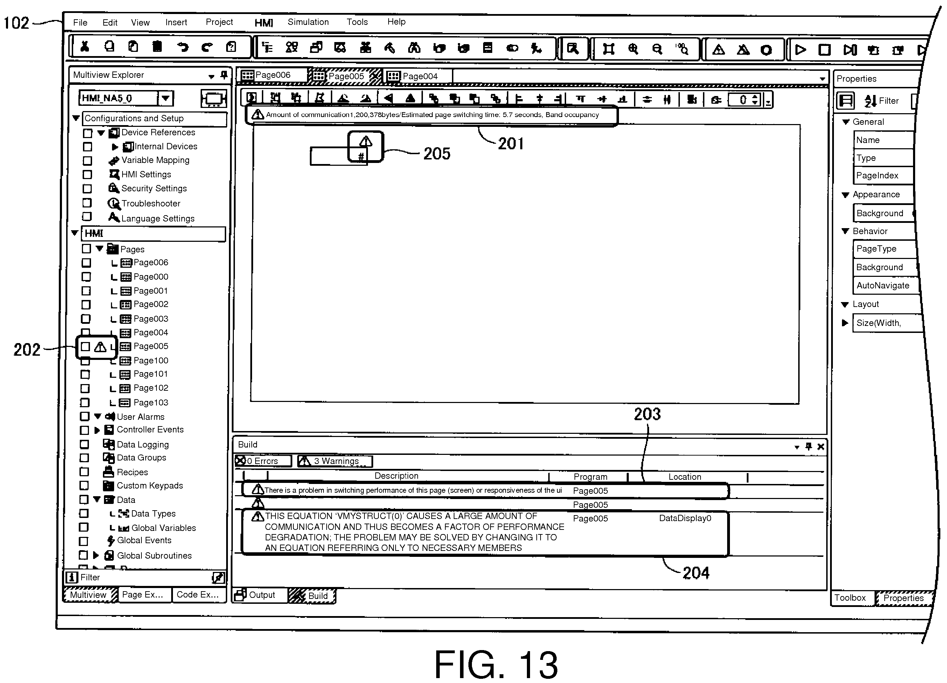

FIG. 13 is a diagram illustrating an example of display of the information related to the performance and the evaluation according to the first embodiment. Although the information is displayed on the display 102 in the first embodiment, the output unit of the information is not limited to the display 102 and may be a sound output unit or a printer. In addition, the information may be stored, and in such a case, an output destination of the information is the storage unit.

First, evaluation processing by the performance evaluation unit 60 will be described. As described above, the acquired amount of communication required when the display of the screen of the detected page is started or when switching to the screen is performed is 155 bytes, and the calculated screen switching time is 155 ms. In the first embodiment, the threshold value of the screen switching time is set to 400 ms, for example. According to experiments, the threshold time is a time from which many operators start to feel that "the start of the display of the screen is slow, or switching is slow". The performance evaluation unit 60 determines that the condition of (155 ms < 400 ms) is satisfied for the detected page by using the threshold value. When the condition is satisfied, that is, in a case in which the screen switching time acquired for the detected page is sufficiently short, the performance evaluation unit 60 does not display warning related to the performance of the detected page. Meanwhile, when the condition is not satisfied, the performance evaluation unit 60 displays the warning.

In addition, the detected page corresponds to a case in which the amount of communication during display of the screen is 894 bytes/second as described above and the communication band occupancy is 89.4%. In the first embodiment, the threshold value of the communication band occupancy is set to 25%, for example. This threshold value is a reference value of a limit of the communication occupancy that does not affect smooth UI operations. The performance evaluation unit 60 determines whether or not the condition (89.4% > 25%) using the threshold value is satisfied for the detected page. When the condition is determined to be satisfied, that is, when the communication band occupancy of the communication path 115 during the display of the screen of the detected page is determined to be high, the performance evaluation unit 60 displays warning related to the performance of the detected page. Meanwhile, when the condition is determined not to be satisfied, the performance evaluation unit 60 does not display the warning.

A page editing screen in a case of creating a detected page is shown on the display 102 in FIG. 13. In the page editing screen in FIG. 13, information related to the estimated performance or performance evaluation is displayed. A list of names of pages included in the HMI program 227 is shown on the left side in the page editing screen in FIG. 13. In addition, a mark 202 of warning is displayed in association with a name of a detected page in the list of the names of the pages. In addition, the warning 201 in the page editing screen includes the information (the amount of communication (1,200,378 bytes) required when the display of the screen of the detected page is started or switched, the aforementioned screen switching time (5.7 seconds), and the communication band occupancy (120.4%) and the like) acquired in the aforementioned respective steps along with the mark of the warning.

In addition, the page editing screen includes warning 203. The performance evaluation unit 60 generates a message indicating that the aforementioned screen switching time acquired for the detected page is long, or the communication band occupancy is high, and thus the operator cannot smoothly perform UI operations and displays the message as the warning 203. This message includes content of performance evaluation (for example, a message indicating that 'there is a problem in a switching performance of page (screen) or responsiveness of the UI').

The page editing screen includes warning 204. The warning 204 includes a mark of the warning and guidance information output from the guidance processing unit 65. The guidance information includes information for improving the performance. The guidance information includes the fact that the detected page has a variable with an amount of data that exceeds a threshold value set in advance, information that specifies a location at which the variable is referred to in the HMI program, or information that specifies a display position of a component corresponding to the variable in the screen of the detected page, for example.

As for the guidance information, the warning in FIG. 13, for example, includes a reason for the warning and a guidance message for improving the performance in association with a location at which the performance is degraded, from among the variables included in the detected page. The guidance message of the warning 204 is for example, "a name of a variable + a fixed phrase "This equation 'vMyStruct(0)' causes a large amount of communication and thus becomes a factor of performance degradation'" or in a case in which the type of the variable is a structure body, for example, "name of the structure body variable + a fixed phrase "This causes a large amount of communication and thus becomes a factor of performance degradation; the problem may be solved by changing it to a structure body including only necessary members."

In addition, in the first embodiment, the guidance processing unit 65 may specify variables with large amounts of data (for example, variables that are equal to or greater than a threshold value (100 bytes) when the variables are extracted from the detected page in Step S4, extracts reference positions of the specified variables in the detected page, and display marks of warning at the reference positions 205 of the variables in the editing screen of the detected page.

Alternatively, the guidance processing unit 65 may display a screen corresponding to the detected page on the display 102 and display the marks of the warning so as to indicate the positions at which components of the variables are displayed on the screen.

### (Display of HMI program and simulation processing)

According to the first embodiment, the display processing unit 70 executes the program of the detected page, generates the display data of the detected page, and outputs the created display data to the display controller 120 in accordance with the execution format project 229 obtained when the HMI program is created. The display controller 120 displays the screen of the detected page on the display 102 in accordance with the display data. Therefore, the user can check the screen of the detected page, which is to be displayed on the display 481 of the programmable terminal 4, o the display 102 of the PC 100 when the HMI program is created.

In a case in which the display processing unit 70 displays the screen of the detected page on the display 102, the simulation unit 71 simulates behavior when the screen is displayed in the programmable terminal 4.

For example, the simulation unit 71 displays the screen of the detected page on the display 102 with a stand-by time in accordance with the amount of communication when the display of the screen is started or switching to the screen is performed, which has been acquired by the first communication amount acquisition unit 40 for the detected page, a stand-by time in accordance with the screen switching time acquired by the switching time acquisition unit 45, or a stand-by time in accordance with the amount of communication during display, which has been acquired by the second communication amount acquisition unit 50.

Alternatively, the simulation unit 71 displays the screen on the display 102 with a stand-by time in accordance with the communication band occupancy acquired for the detected page.

The user is made to wait by the aforementioned stand-by time until the screen is displayed on the display 102 after the operation of starting the display (or switching the display) of the screen of the detected page via the keyboard 104, thereby experiencing the performance that the screen of the detected page has. In this manner, the PC 100 can function as a "simulation apparatus" that simulates the behavior of the programmable terminal 4 when the screen is displayed.

According to the first embodiment, it is possible to let the user know the performance of the HMI program 227 for causing the programmable terminal 4 to display the screen when the HMI program 227 is created.

In this manner, it is possible to specify a page of a screen with low performance in a stage of creating the HMI program and to employ a measure (to edit the HMI program again). Therefore, it is possible to address a problem in performance in the stage of creating the HMI program and to improve development efficiency of the HMI program as compared with a case in which no problem in performance can be found until the HMI program is made to operate on an actual machine.

### [Second embodiment]

A second embodiment is a modification example of the first embodiment. Although the environment for creating the HMI program is provided in the PC 100 in the first embodiment, the program creation environment is not limited to the case of being provided in the PC 100. For example, the programmable terminal 4 can include the environment for creating the HMI program (see FIG. 5) and the performance estimation evaluation unit 10B. In such a case, the "target apparatus" is the programmable terminal 4, and the programmable terminal 4 can function as the "screen creation apparatus" or the "simulation apparatus" by the PC 100 described above.

### [Third embodiment]

According to a third embodiment, a program for causing the CPU 110 of the PC 100 or the CPU 411 of the programmable terminal 4 to execute at least one of the aforementioned "screen creation apparatus" and the "simulation apparatus" is provided. Such a program can be provided as a program product by being recorded in a (transitory or non-transitory) computer-readable recording medium such as a flexible disk that accompanies the PC 100 or the programmable terminal 4, a compact disk-read only memory (CD-ROM), a ROM, a RAM, and memory cards 106 and 420. Alternatively, it is also possible to provide the program by recording the program in a recording medium such as the hard disk 114. In addition, it is also possible to provide the program by downloading the program from a network, which is not illustrated in the drawing, via the communication interfaces 124 and 419.

In addition, the program may cause the CPU to call necessary modules in a predetermined sequence at a predetermined timing from among program modules that are provided as a part of the operating system (OS) of the PC 100 or the programmable terminal 4 and execute the modules. In such a case, the program itself does not include the modules, and the processing is executed in cooperation with the OS. Such a program that does not include the modules can also be included in the program according to the third embodiment.

In addition, the program according to the third embodiment may be provided by being incorporated in a part of another program. The program itself does not include the modules included in another program, and the processing is executed in cooperation with another program even in such a case. Such a program incorporated in another program can also be included in the program according to the third embodiment.

The provided program product is installed in a program storage unit such as a hard disk and is then executed. In addition, the program product includes the program itself and a recording medium that records the program therein.

### [Reference Sings List]

1, 2, 3 PLC
4 Programmable terminal
10 CPU unit
10A Editor
10B Performance estimation evaluation unit
10C Compiler
10D Performance estimation unit
11 System bus
12 Power source unit
15 Detection sensor
16 Relay
20 Page detection unit
30 Variable extraction unit
40 First communication amount acquisition unit
45 Switching time acquisition unit
50 Second communication amount acquisition unit
55 Band occupancy acquisition unit
60 Performance evaluation unit
65 Guidance processing unit
70 Display processing unit
71 Simulation unit
80 Interface unit
90 Storage unit
100 PC
102, 481 Display
104 Keyboard
106, 420 Memory card
110, 411 : CPU
111, 115 Communication path
112 : Memory
113 : Timer
114 : Hard disk
118 : Input interface
120 : Display controller
124, 419 : Communication interface
126 : Data reader/writer
128 : Bus 201, 203, 204 Warning
202 Mark
205 Position
220, 230 : OS
221 : HMI device tool program
224 : Library
225 : Standard project
227 : HMI program
228 : Definition
229 : Execution format project
412 : ROM
413 : RAM
414 : Flash ROM
415 : Clock
416 : Operation key
417 : Data reader/writer
418 : touch screen
482 : touch panel
S1∼S11 : Step

## Claims

1. A screen creation apparatus (100) that creates a program for causing a target apparatus (4) to display a screen, wherein the screen includes one or more components, the target apparatus (4) makes a request for data for components that are necessary to display or execute the components of the screen and receives the data for the components as a response from a counterpart apparatus (1, 2, 3) via a communication path (115) in a case in which the screen is displayed, the screen creation apparatus (100) comprises:
a communication amount storage unit (90) that stores an amount of communication necessary for a case in which the data for the components is transferred via the communication path (115), and
in a case in which the program is created, an amount of screen communication that is an amount of communication corresponding to the one or more components included in the screen is acquired.

2. The screen creation apparatus (100) according to claim 1, further comprising:
a performance estimation unit (10D) that estimates a performance of the program for causing the target apparatus (4) to display the screen by using the amount of screen communication.

3. The screen creation apparatus (100) according to claim 2,
wherein the performance includes a screen switching time required for causing the target apparatus (4) to display the screen, and
the performance estimation unit (10D) includes
a switching time acquisition unit (45) that acquires the screen switching time according to a communication performance of the counterpart apparatus (1, 2, 3) and the amount of screen communication.

4. The screen creation apparatus (100) according to claims 2 or 3,
wherein the performance includes the amount of communication during display that is the amount of communication for the components that is requested to be transferred during the display of the screen in the target apparatus (4), and
the performance estimation unit (10D) includes
a communication-amount-during-display acquisition unit (40, 50) that acquires the amount of communication during display by using the amount of screen communication and a period over which the data for the components is transferred to the target apparatus (4) during the display of the screen.

5. The screen creation apparatus (100) according to any one of clams 2 to 4,
wherein the performance includes a band occupancy that is a proportion of a band of the communication path (115) occupied by the transfer of the data for the components during the display of the screen in the target apparatus (4), and
the performance estimation unit (10D) includes
a band occupancy acquisition unit (55) that acquires a proportion of the band occupied by the amount of communication during display, which is acquired by using the amount of screen communication and a period over which the data for the components is transferred to the target apparatus (4) during the display of the screen.

6. The screen creation apparatus (100) according to any one of claims 2 to 5,
wherein information related to the estimated performance is output via an output unit.

7. The screen creation apparatus (100) according to any one of claims 2 to 6, further comprising:
a performance evaluation unit (60) that evaluates the performance by comparing the estimated performance with a threshold value set in advance.

8. The screen creation apparatus (100) according to claim 7,
wherein information related to the evaluation is output via an output unit.

9. The screen creation apparatus (100) according to claim 8,
wherein the information related to the evaluation includes information that specifies a screen that has a component that exceeds an amount of data set in advance or information that indicates a position of the component, which exceeds the amount of data set in advance, in the screen.

10. The screen creation apparatus (100) according to claim 3, further comprising:
a simulation unit (71) that simulates the display of the screen by the target apparatus (4),
wherein the simulation unit (71) displays, on a display (102), a screen based on the program with a stand-by time in accordance with the acquired screen switching time.

11. The screen creation apparatus (100) according to claim 4, further comprising:
a simulation unit (71) that simulates the display of the screen by the target apparatus (4),
wherein the simulation unit (71) displays, on a display (102), a screen based on the program with a stand-by time in accordance with the acquired amount of communication during display.

12. The screen creation apparatus (100) according to claim 5, further comprising:
a simulation unit (71) that simulates the display of the screen by the target apparatus (4),
wherein the simulation unit (71) displays, on a display (102), a screen based on the program with a stand-by time in accordance with the acquired band occupancy.

13. A simulation apparatus that simulates behavior during display of a screen in a target apparatus (4),
wherein the screen includes one or more components,
the target apparatus (4) makes a request for data for the components for displaying the components of the screen and receives the data for the components as a response from a counterpart apparatus (1, 2, 3) via a communication path (115) in a case in which the screen is displayed, and
the simulation apparatus includes
a communication amount storage unit that stores an amount of communication necessary for a case in which the data for the components is transferred via the communication path (115), and
a performance estimation unit (10D) that estimates a performance for causing the target apparatus (4) to display the screen of a program by using an amount of screen communication that is the amount of communication corresponding to the one or more components included in the screen in a case in which the program for displaying the screen is created.

14. A program that causes a computer (100) to execute a method of creating a screen to be displayed in a target apparatus (4),
wherein the screen includes one or more components,
the target apparatus (4) makes a request for data for the components for displaying the components of the screen and receives the data as a response from a counterpart apparatus (1, 2, 3) via a communication path (115) in a case in which the screen is displayed, and
the method includes
acquiring an amount of screen communication that is the amount of communication corresponding to the one or more components included in the screen in a case in which a display program for causing the target apparatus (4) to display the screen is created, and
estimating a performance for causing the target apparatus (4) to display the screen of the display program by using the amount of screen communication.
